# EUROPEAN PATENT APPLICATION

(11) **EP 2 398 218 A2**
(43) Date of publication of application: **21.12.2011**
(21) Application number: 11177107.7
(22) Date of filing: 08.05.2007
(51) Int. Cl.: H04M 15/00, H04M 15/28

(54) **Call cost indicator for mobile devices**

(30) Priority: 01.05.2007 US 742953
(62) Divisional of application: 07107763.0
(71) Applicant: RESEARCH IN MOTION LIMITED, Waterloo, Ontario N2L 3W8 (CA)
(72) Inventor: Heit, David Lloyd, Waterloo, Ontario N2V 2K2 (CA); Asthana, Atul, Unionville, Ontario L3R 2Y1 (CA); Gisby, Douglas Michael, Atlanta, GA Georgia 30350 (US); McDonald, Ian James, Waterloo, Ontario N2L 4N7 (CA); Oliver, Brian, Fergus, Ontario N1M 1C8 (CA); Bakker, Jan (John-Luc), Flemington, NJ New Jersey 08822 (US); Alfano, Nicholas, Egham, Surrey TW20 9LF (GB)
(74) Representative: Moore, Barry

(57) **Abstract**

A method and apparatus to enhance decision-making capabilities of a user of a mobile device, the method having the steps of: receiving, at the mobile device, information related to the cost of mobile services; and communicating an indication of the cost of mobile services to the user.

## Description

The present disclosure relates generally to mobile devices, and in particular, to the provision of information to users of mobile devices.

Users of mobile devices or mobile user equipment (UE) are increasingly becoming more sophisticated in terms of functionality that they require from their mobile devices. Further, enterprises are increasingly utilizing management and information technology policies for mobile devices within the enterprise.

One piece of information that would be useful on mobile devices is the cost of a transaction. A transaction could include circuit switched services such as a voice call or short message service/multimedia message service (SMS/MMS). Alternatively, a transaction could be a packet switched service such as the downloading of information from a website. This information would be helpful to a user or enterprise when controlling charges for the mobile device.

With the introduction of multi-mode handheld devices, the user may also wish to know the cost of a call over a specific network service. For example, the cost of transferring data over a WiFi service may be less than the transferring over the mobile network.

### GENERAL

The present disclosure may provide a handheld user with a display or indication, either visual or audio, of the cost of mobile services. Such mobile services may include, but are not limited to, voice calls and/or the cost of data transfer at a given instance in time based on the location, network service, subscription (billing plan) or other factors of the mobile device. As used herein, a call cost indicator may be an indicator of the cost of both packet switched and circuit switched services. Such information may provide a user with the ability to make informed decisions regarding the use of the mobile device.

The call cost indicator could provide information such as a cost per minute for voice call to a long distance destination, cost per minute for local calls, applied roaming charges, the number of minutes consumed and minutes available in the user's calling plans over a specific time period per month, the number of bytes transmitted or received over a period or a current consumption of data transfers and the maximum allowed before additional costs are applied and the costs for telephony or data services at different times of the day.

In one embodiment, the call cost indicator may be an icon on a handheld screen or a dashboard style display or other type of graphical or audio representation showing the cost of a call or data transfer or other information pertaining to the user's intended action.

In a further embodiment, other information, such as the quality of a voice call may be included in the information provided. Such quality indication could use terms such as low, medium or high to provide some other type of scaling to show voice quality.

A telephony server can be used to collect information about a user's billing plan and information regarding the user telephone service usage. As used herein, a telephony server can be a server for circuit switched or packet switched transactions and can collect information about either data or voice calls. The information can be stored in a telephony server database and when a user enters a voice call or clicks on a URL, the handheld can pass a query to the telephony server asking for cost estimates for these activities. Alternatively, a client on the handheld can be passively interacting with the mobile service to be updated with the latest costing information based on location, subscription and network service the handheld is currently using.

The present disclosure therefore may provide a method to enhance decision making capabilities of a user of a mobile device comprising the steps of: receiving, at the mobile device, information related to the cost of mobile services; and communicating an indication of the cost of mobile services to the user.

The present disclosure may further provide a mobile device adapted to enhance decision making capabilities of a user comprising: a receiver adapted to receive information related to the cost of mobile service; and an output adapted to provide an indication of the cost of mobile services to the user.

The present disclosure may further provide a telephony server comprising: a communications subsystem; a processor adapted to query, through said communications subsystem, other servers regarding costs of mobile services; and memory for storing results of the queries by the processor related to information for the costs of mobile services, wherein said communications subsystem is further adapted to communicate the information for the costs of mobile services to one or more mobile devices.

### BRIEF DESCRIPTION OF THE DRAWINGS

The present disclosure will be better understood with reference to the drawings in which:
**Figure 1** is diagram showing an exemplary mobile device with multiple cost indications provided;
**Figure 2** is data flow diagram of one embodiment of a system for providing cost indicators;
**Figure 3** is a data flow diagram of a further embodiment of a system for providing cost indicators;
**Figure 4** is a simplified block diagram of a telephony server; and
**Figure 5** is a block diagram of an exemplary mobile device.

### DESCRIPTION OF PREFERRED EMBODIMENTS

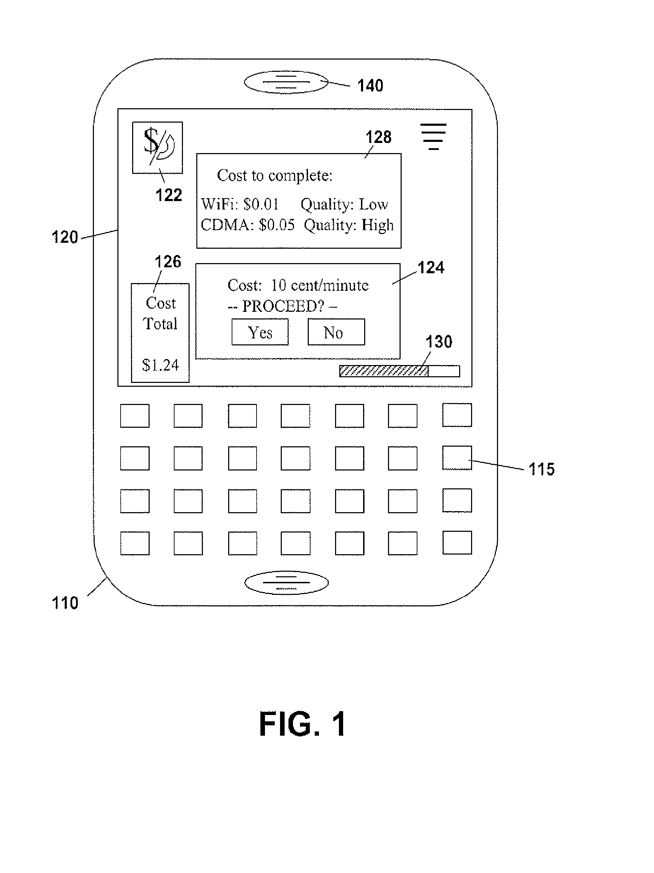

Reference is now made to **Figure 1. Figure 1** shows an exemplary mobile device **110** having a keyboard or other input **115,** a display **120** and a speaker **140.**

Input **115** could comprise a keyboard, keypad, scroll wheel, touch pad, or other input means that would be known to those skilled in the art.

The present disclosure relates to the providing of a cost indicator on mobile device **110.** As such, an indicator could be provided on display **120.** The diagram of **Figure 1** shows various examples of indicators on a display that could be used, but is not meant to be limited to these indicators, as described below.

In order to provide a user with enhanced decision making ability regarding whether to proceed with a transaction, a cost indicator is provided. A cost indicator for user will vary depending on the action being performed by the user, the capabilities of the mobile device and the level of detail required by the user or enterprise.

Referring to the exemplary device of **Figure 1****,** a first call indicator is passive icon **122.** In the embodiment of **Figure 1****,** the passive icon **122** on display **120** can be clicked at any time to display the current costs of calls to various destinations or allow a user to enter a number and request a cost estimate. The icon **122** could further be used to show the cost of ongoing voice calls or data transfers.

Clicking icon **122** provides information such as a cost per minute for a voice call to a long distance destination. This could, for example, be provided immediately preceding a voice call to indicate that the intended call will cost a certain amount per minute, such as in popup screen **124.** Alternatively, the information could be provided in a table form (not shown) to the user to indicate the costs for various regions from the current location of the mobile device. For example, a user intending to make a voice call could click on icon **122** to open a table to provide information about the cost for calling long distance to whatever countries are specified in the table.

Display **120** could show a popup screen **124** that could be displayed immediately after a number is dialed or a URL is clicked to download a large file, but prior to the actual execution of the call or download, showing the cost of the intended action. The popup screen **124** in one embodiment displays the estimated cost of the call or a data transfer and asks a user if they wish to proceed.

As will be appreciated by those skilled in the art, the popup screen **124** could display either the cost for a specific time period or an absolute cost. For example, for a voice call it may be more appropriate to display that the call would cost 10 cents per minute. For a download of a large file, the file size may be known in advance and therefore the popup screen **124** could display an absolute cost such as 25 cents to download a specific file.

Other call cost indicators could include a cost-per-minute for local calls. The cost could be broken down into the cost for the long distance services and for any roaming charges.

Display **120** could further show a window **126** that could show the cost of a call during the call and provide the total at the end of the call. Such a window is, for example, a dashboard. Alternatively, a popup window could appear at the end of a call showing the total costs for the call.

Other indicators on display **120** could also be shown. For example, a bar **130** could indicate the number of minutes a user has consumed in a monthly billing plan and the number of minutes available. The bar could indicate this in a graphical format but could be clicked to indicate a precise amount. Alternatively, windows could show the exact amount or the amount could be retrieved by clicking a passive icon.

Thus the cost could be indicative of the number of minutes consumed and the number of minutes available on the user's calling plan over a specific time period. If, for example, a user has 300 minutes of long distance time per month, the cost indicator could indicate that the user has consumed 157 minutes and thus has 143 minutes remaining. Similarly, the number of bytes transmitted and received over a period, such as a month, could be provided and the current consumption of data transfers and the maximum allowed before additional costs are applied could be shown.

On multi-mode devices with two or more communications channels, other options are available. A window **128** on display **120** could be opened prior to a call being made when two or more network services are available for the mobile device **110.** For example, a user may wish to see a comparison for a voice call where the voice call is directed over a WiFi network service or over a mobile service. Window **128** may include quality estimates as well. For example, in the display window **128** of **Figure 1****,** the window shows that a call over WiFi may be 1 cent per minute but the voice quality may be low, whereas the call over a wireless network such as CDMA could cost 5 cents per minute but the voice quality would be high. The user could then select which service to use based on the user's needs.

If costs for voice and data services are different at different times of the day, this can also be provided to the user.

The above is not meant to be limiting to the type of cost indicators that could be provided and other indicators would be evident to those skilled in the art having regard to the present disclosure. The items on display **120** of **Figure 1** are not meant to be limiting. Further, the items shown on display **120** of **Figure 1** could be used alone and without any of the other items shown or could be used in combination with one or more of the other items on display **120.**

In a further embodiment, a speaker **140** could be used to provide audio indications of the call costs rather than or in conjunction with the use of a display **120.**

Further, where information is not available to provide an accurate or estimated cost, the indicator could provide a warning to the user that no information is available regarding the cost or that the cost is unknown.

In one embodiment, once the cost information is collected and available, the user or enterprise IT policy can use the cost information to set thresholds for acceptable costs for a mobile service. Thus, for example, a policy may be to allow only large downloads, such as music files, to occur when the device is connected over WiFi or a ceiling could be set for the highest cost that a user is willing to pay for bandwidth to download a podcast, for example. Thus, the user or enterprise may set a rule to only allow downloads of the selecting music files or podcasts when the cost for the data transfer is lower than .01 cents per megabyte.

Further, voice calls can be limited to certain maximum costs or restricted to certain times of the day. These decisions are based on the cost of these activities, which are in turn a function of the network service in use and the associated subscription and billing plan.

In one embodiment, the thresholds can be used to provide warnings. Thus, for example, if the user's actions fall below the threshold, the action can proceed without verification. However, if the user's actions result in a cost being above a threshold, then the user may need to confirm that he or she wishes to proceed with his or her actions. A user downloading a large file with a cost estimate of 0.02 cents per megabyte may need to verify that the user indeed wishes to proceed where the threshold is set at 0.01 cents per megabyte for file downloads. Other examples would be evident to those skilled in the art.

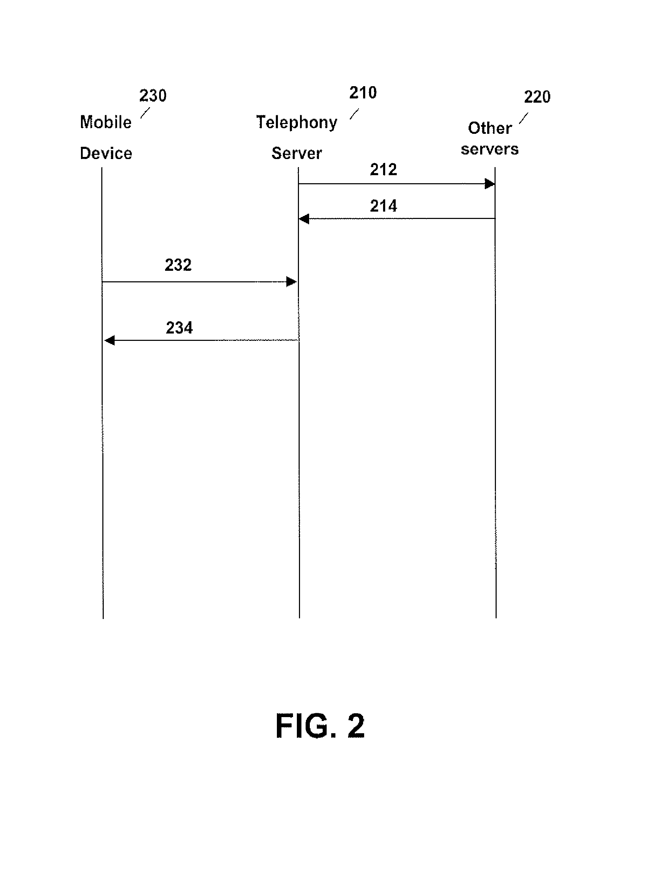

Reference is now made to **Figure 2. Figure 2** illustrates a data flow diagram of one embodiment for implementing the above captioned indicators.

In the embodiment of **Figure 2****,** a telephony server **210** can be used to collect information about a user's billing plan and information regarding the user's telephone service usage. The telephony server **210** communicates with other servers **220** to collect this information, for example in messages **212** and **214.**

The retrieved information is stored on telephony server **210.**

In the embodiment of **Figure 2****,** mobile device **230** communicates with telephony server **210** to obtain information stored on telephony server **210.**

In one embodiment, mobile device **230** can send a specific query regarding the cost of a specific action. Thus, for example, if a user is making a telephone call, prior to the user making the call, a query **232** can be sent between mobile device **230** and telephony server **210.** Query **232** includes the telephone number that mobile device **230** is planning to call. As will be appreciated, query **232** will preferably include information identifying mobile device **230** to telephony server **210.**

In response to query **232,** telephony server **210** sends a response **234** indicating the cost of the action specified in query **232.** In this way, mobile device **230** can inform a user about the costs of a planned action and allows a user to make a more informed decision about whether the user wishes to proceed with the planned action.

Query **232** can be used to obtain a variety of cost information. For example, the query **232** could relate to the costs for downloading a file. Specifically, if a user clicks on a URL to download a specific page, then query **232** could include the URL to telephony server **210.** The query **232** could include the size of the page or telephony server **210** could obtain the size of the page and based on this information and the billing plans, data charges, roaming charges or any other information about mobile device **230,** telephony server **210** could provide a response **234** indicating the cost of downloading the file.

Query **232** could also be used to obtain non-cost information. For multi-mode devices it may be desirable for a user to have quality of service information for the communications channels the device is able to use, and thus query **232** could be used to obtain quality of service information, instead of or in addition to cost information.

Other alternatives would be apparent to those skilled in the art.

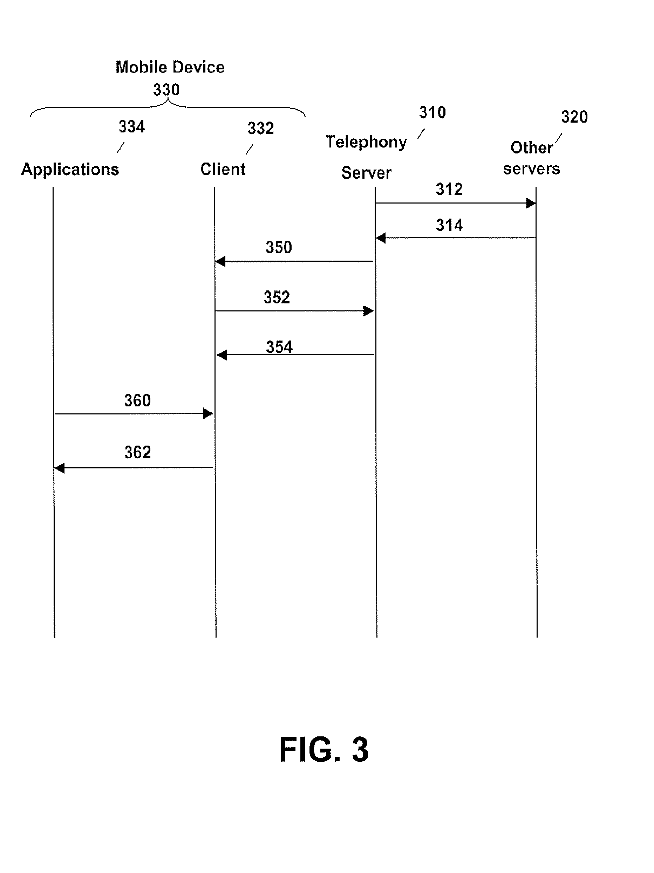

Reference is now made to **Figure 3****.** In a further embodiment, mobile device **330** could include a cost client **332** communicating with mobile applications **334.**

Cost client **332** communicates with telephone server **310** to collect and store information about the costs for services. Specifically, telephony server **310** communicates with other servers **320** to obtain information in messages **312** and **314.** Other servers **320** could include carrier billing information, accounting, home location register/visited location register (HLR/VLR) or other network service providers.

Telephony server **310** stores this information and can either periodically send this information in message **350** to client **332.** Alternatively, client **332** could provide a query **352** to telephony server **310** asking for information and telephony server **310** could provide a response **354** providing the information to client **332.**

As will be appreciated by those skilled in the art, client **332** could send a request **352** when, for example, the mobile device **330** changes networks, is turned on, or for other reasons that would be appreciated by those skilled in the art.

When an application **334** for a mobile service is launched or an action started, or if a user launches a query about the cost of a mobile service, application **334** can send a query **360** to client **332** and client **332** can respond with a message **362** to application **334.** Such information is stored by client **332** based on communications with telephony server **310.**

The application **334** can then display the information or provide the information in another way to the user. Further, application **334** can use the information to compare with a threshold to ensure that the cost for the mobile service does not exceed a predetermined value. If the cost does exceed the predetermined value, the user can be prompted to verify that he or she wishes to proceed, or the transaction can be blocked, for example.

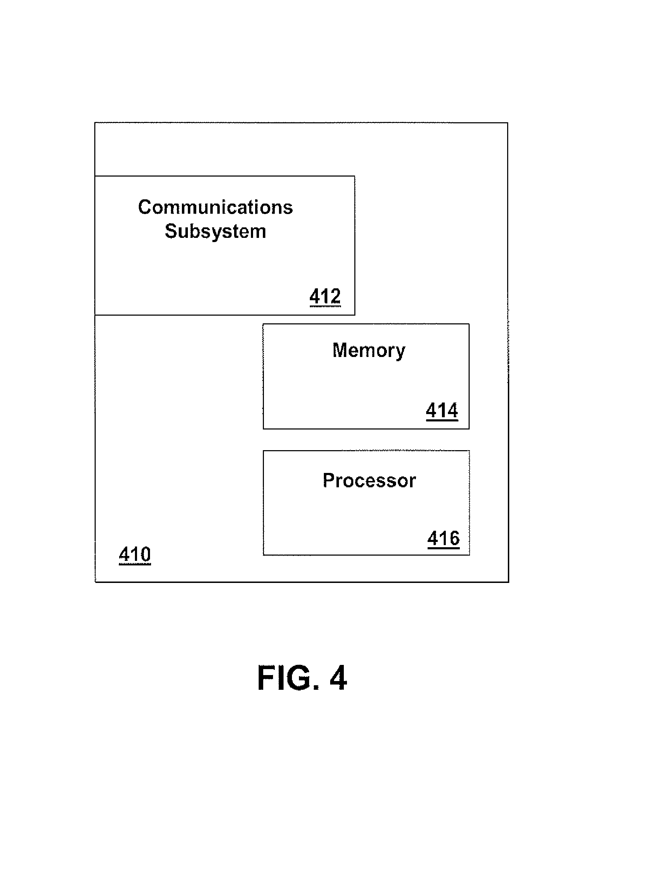

Reference is now made to **Figure 4. Figure 4** illustrates a simplified block diagram of a telephony server. Telephony server **410** includes a communications subsystem **412** adapted to both communicate with other servers such as other servers **220** from **Figure 2** or other servers **320** from **Figure 3****.** Communications subsystem **412** is further adapted to communicate with a mobile device such as a mobile device **110** from **Figure 1**, **230** from **Figure 2** and **330** from **Figure 3****.**

Telephony server **410** further includes memory **414** and a processor **416.**

Processor **416** is adapted to get cost information from other servers, such as other servers **220** from **Figure 2** and **320** from **Figure 3****.** Memory **414** is adapted to store this information.

Processor **416** is further adapted to receive and process queries from a mobile device, such as mobile device **110, 230** or **330** from **Figures 1****,** **2** or **3** respectively, and to provide a response using communication subsystem **412** to these mobile devices.

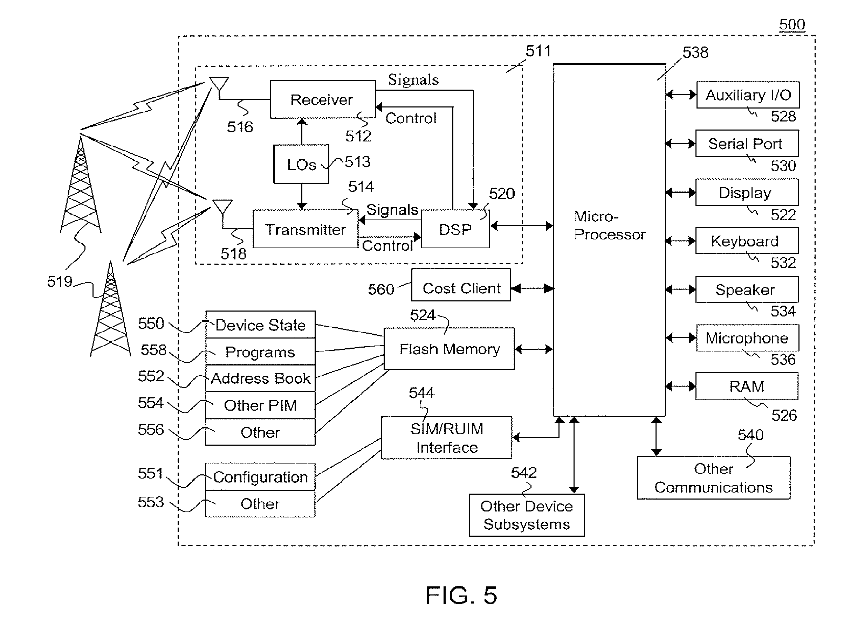

As will be appreciated by those skilled in the art, various mobile devices could be used to provide the user with an indication of the cost for a mobile service in order to allow the user to make a better decision regarding whether or not to complete a mobile service. One exemplary mobile device is illustrated with regard to **Figure 5****.**

**Figure 5** is a block diagram illustrating a mobile device apt to be used with preferred embodiments of the apparatus and method of the present application. Mobile device **500** is preferably a two-way wireless communication device having at least voice and data communication capabilities. Mobile device **500** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **500** is enabled for two-way communication, it will incorporate a communication subsystem **511,** including both a receiver **512** and a transmitter **514,** as well as associated components such as one or more, preferably embedded or internal, antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some CDMA networks, for example, network access is associated with a subscriber or user of mobile device **500.** A CDMA mobile device may require a removable user identity module (RUIM) or a subscriber identity module (SIM) card in order to operate on a CDMA network. The SIM/RUIM interface **544** is normally similar to a card-slot into which a SIM/RUIM card can be inserted and ejected like a diskette or PCMCIA card. The SIM/RUIM card can have approximately 64K of memory and hold many key configuration **551,** and other information **553** such as identification, and subscriber related information.

When required network registration or activation procedures have been completed, mobile device **500** may send and receive communication signals over the network **519.** As illustrated in **Figure 5****,** network **519** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **516** through communication network **519** are input to receiver **512,** which may perform such common receiver functions as signal amplification, frequency down conversion, filtering, channel selection and the like, and in the example system shown in **Figure 5****,** analog-to-digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital-to analog-conversion, frequency-up-conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** preferably includes a microprocessor **538,** which controls the overall operation of the device. Communication functions, including at least data and voice communications, are performed through communication subsystem **511.** Microprocessor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list.

Operating system software used by the microprocessor **538** is preferably stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. Various collections are also stored in flash memory **524.** Microprocessor **538,** in addition to its operating system functions, preferably enables execution of software applications on the mobile device. A predetermined set of applications that control basic operations, including at least data and voice communication applications for example, will normally be installed on mobile device **500** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **519.** In a preferred embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or preferably a non-volatile store (not shown) for execution by the microprocessor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the microprocessor **538,** which preferably further processes the received signal for output to the display **522,** or alternatively to an auxiliary I/O device **528.**

A user of mobile device **500** may also compose data items such as email messages for example, using the keyboard **532,** which is preferably a complete alphanumeric keyboard or telephone-type keypad, in conjunction with the display **522** and possibly an auxiliary I/O device **528.** Such composed items may then be transmitted over a communication network through the communication subsystem **511.**

For voice communications, overall operation of mobile device **500** is similar, except that received signals would preferably be output to a speaker **534** and signals for transmission would be generated by a microphone **536.** Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call-related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices.

A cost client **560** could be used to track the cost of mobile services.

Furthermore aspects and features of this disclosure are set out in the flowing paragraphs provided as clauses, which correspond to the claims of the parent application as filed:
1. A method to enhance decision making capabilities of a user of a mobile device comprising the steps of:
   receiving, at the mobile device, information related to the cost of mobile services; and
   communicating an indication of the cost of mobile services to the user.
2. The method of clause 1, wherein the information related to the cost of mobile services comprises one or more of the following: cost per minute for a voice call to a long distance destination; cost per minute for local calls; applied roaming charges; number of minutes consumed and available in a user's calling plan over a specified time period; number of bytes transmitted and received over a period; current consumption of data transfers and bytes remaining before additional charges are incurred; and/or time dependent telephone or data transfer costs.
3. The method of clause 1 or clause 2, wherein the information related to the cost of mobile services is received from a telephony server adapted to compile the information related to the cost of mobile services.
4. The method of clause 3, further comprising the step of querying the telephony server, prior to completing a mobile service, for the cost of the mobile service, whereby said information related to the cost of mobile services relates to the mobile service being completed.
5. The method of clause 3, further comprising the step of storing, at the mobile device, the information related to the cost of mobile services,
   whereby the communication of the indication of the cost of mobile services is based on information stored on the mobile device.
6. The method of clause 5, wherein the information is received periodically and/or whenever the mobile device enters a new network.
7. The method of any one of clauses 1 to 6, wherein the communicating step provides an audio and/or visual indication.
8. The method of clause 7, wherein the visual indication is one or more of:
   a passive icon a user can select to show current costs of calls to various destinations, allow a user to input a telephone number and find the cost of making a call to the telephone number, or find the cost of an ongoing voice call or data transfer;
   a window displayed to a user after a user selects a mobile service, indicating the cost of the mobile service;
   a window showing a running total of the cost of a mobile service and a final cost once the mobile service has ended;
   a visual element indicating number of minutes used and remaining in a billing plan; and/or
   a visual element indicating number of bytes downloaded and number of bytes remaining before extra billing is incurred in a billing plan;
9. The method of any one of clauses 1 to 8, wherein said mobile device is a multi-mode device, said communicating step providing a comparison of costs for the mobile service over two or more communications channels.
10. The method of clause 9, wherein the receiving step further receives information related to the quality of service for each of the two or more communications channels and said communicating step provides, with the comparison of costs, the information related to the quality of service for each of the two or more communications channels.
11. The method of any one of clauses 1 to 10, further comprising the step of:
   setting a threshold for a maximum cost of a mobile service; and
   limiting the mobile service if the cost of the mobile service is greater than the threshold.
12. The method of clause 11, wherein the limiting step includes prompting a user for confirmation that the user wishes to proceed.
13. The method of clause 12, wherein the limiting step includes prohibiting the mobile service.
14. A mobile device adapted to enhance decision making capabilities of a user comprising:
   a memory for storing computer readable instructions;
   a processor capable of executing said computer readable instructions to cause said mobile device to perform the steps of the method of any one of clauses 1 to 13.
15. A telephony server comprising:
   a communications subsystem;
   a processor adapted to query, through said communications subsystem, other servers regarding costs of mobile services; and
   memory for storing results of the queries by the processor related to information for the costs of mobile services,wherein said communications subsystem is further adapted to communicate the information for the costs of mobile services to one or more mobile devices.
16. The telephony server of clause 15, wherein the information related to the cost of mobile services comprises one or more of the hollowing- cost per minute for a voice call to a long distance destination; cost per minute for local calls; applied roaming charges; number of minutes consumed and available in a user's calling plan over a specified time period; number of bytes transmitted and received over a period; current consumption of data transfers and bytes remaining before additional charges are incurred; and/or time dependent telephone or data transfer costs.
17. The telephony server of clause 15 or clause 16, wherein the server is adapted to communicate information related to the cost of mobile services to the one or mobile devices in response to a query by the one or more mobile devices.
18. The telephony server of any one of clauses 15 to 17, wherein the telephony server is adapted to communicate the information for the costs of the mobile services to each of the one or more mobile devices when the each of said one or more mobile devices changes networks.
19. A communications system comprising the telephony server of any one of clauses 15 to 18 and a plurality of mobile devices according to clauses 14.
20. A computer readable medium having computer readable instructions stored thereon for causing a computing device to implement the steps of the method of any one of clauses 1 to 13.

The embodiments described herein are examples of structures, systems or methods having elements corresponding to elements of the techniques of this disclosure. This disclosure may enable those skilled in the art to make and use embodiments having alternative elements that likewise correspond to the elements or the techniques of this disclosure. The intended scope of the techniques of this disclosure thus includes other structures, systems or methods that do not defer from the techniques of the disclosure as described herein, and further includes other structures, systems or methods within substantial differences from the techniques of this disclosure as described herein.

## Claims

1. A telephony server comprising:
a communications subsystem;
a processor adapted to query, through said communications subsystem, other servers regarding costs of mobile services; and
memory for storing results of the queries by the processor related to information for the costs of mobile services,
wherein said communications subsystem is further adapted to communicate the information for the costs of mobile services to one or more mobile devices.

2. The telephony server of claim 1, wherein the information related to the cost of mobile services comprises one or more of: cost per minute for a voice call to a long distance destination; cost per minute for local calls; applied roaming charges; number of minutes consumed and available in a user's calling plan over a specified time period; number of bytes transmitted and received over a period; current consumption of data transfers and bytes remaining before additional charges are incurred; and/or time dependent telephone or data transfer costs.

3. The telephony server of claim 1 or claim 2, wherein the server is configured to communicate information related to the cost of mobile services to the one or more mobile devices in response to a query by the one or more mobile devices.

4. The telephony server of claim 3, wherein the query by the one or more mobile devices relates to an estimate of the cost of using the one or more mobile services.

5. The telephony server of any one of claims 1 to 4, wherein the telephony server is adapted to communicate the information for the costs of the mobile services to each of the one or more mobile devices when the each of said one or more mobile devices changes networks.

6. The telephony server of any one of claims 1 to 5, wherein the information for the costs of the mobile services depends on a location, a subscription, and a network service of the one or more hand mobile devices.

7. The telephony server of any one of claims 1 to 6, wherein the information for the costs of the mobile services includes information for the costs of the mobile services over a first network and information for the costs of the mobile services over a second network.

8. The telephony server of claim 7, wherein the first network is a wireless local area network.

9. The telephony server of claim 7 or 8, wherein the second network is a CDMA network.

10. The telephony server of any one of claims 1 to 9, wherein the processor is further adapted to query, through said communications subsystem, other servers regarding a billing plan of a user.

11. The telephony server of claim 10, wherein the information for the costs of mobile services is based on the billing plan.

12. The telephony server of claim 3, wherein the query by the one or more mobile devices includes a uniform resource locator (URL).

13. The telephony server of claim 12, wherein the information for the costs of mobile services includes the cost of downloading the resource identified by the URL.

14. The telephony server of claim 3, wherein the query by the one or more mobile devices relates to quality of service information.

15. The telephony server of any one of claims 1 to 14, wherein the other servers include at least one of a carrier billing information server, an accounting server, and a home location register/visited location register (HLR/VLR) server.

16. The telephony server of any one of claims 1 to 15, wherein the communications subsystem is further adapted to communicate the information for the costs of mobile services periodically.
